# EUROPEAN PATENT APPLICATION

(11) **EP 4 119 856 A1**
(43) Date of publication of application: **18.01.2023**
(21) Application number: 22184211.5
(22) Date of filing: 11.07.2022
(51) Int. Cl.: F24F 3/044, F24F 7/08, F24F 8/10, F24F 11/46, F24F 11/65, F24F 11/72, F24F 110/65, F24F 110/66, F24F 110/70

(54) **INDOOR AIR QUALITY FOR VARIABLE AIR VOLUME SYSTEM**

(30) Priority: 12.07.2021 US 202163220798 P
(71) Applicant: Carrier Corporation, Palm Beach Gardens, FL 33418 (US)
(72) Inventor: XU, Ke, Kennesaw, 30144 (US); DORNA, Luke, Kennesaw, 30144 (US); PIETRZYKOWSKI, Christopher, Kennesaw, 30144 (US)
(74) Representative: Dehns

(57) **Abstract**

A heating ventilation and air conditioning (HVAC) system (20) includes an air handling unit (24) having an outlet (44), at least one zone (22) operably coupled to the outlet of the air handling unit; and at least one indoor air quality sensor (S_{IAQ}) operable to monitor a level of one or more contaminants. The at least one indoor air quality sensor is arranged within the at least one zone. A controller (50) operably coupled to the at least one indoor air quality sensor and is configured to determine when an amount of the one or more contaminants within the at least one zone exceeds an allowable threshold and implement a multi-level ventilation strategy to reduce the amount of the one or more contaminants within the at least one zone to below the allowable threshold.

## Description

Exemplary embodiments of the present disclosure relate to a heating ventilation and air conditioning (HVAC) system, and more particularly, to a method of operating a heating, ventilation, and air conditioning (HVAC) system.

In a typical climate control system of a building, such as a heating ventilation and air conditioning (HVAC) system, a thermostat controls the temperature of an area to be conditioned within the building. A building central heating/cooling unit forces heated or cooled air to various points in the building through duct work. The temperature is therefore controlled by varying the airflow delivered to the area to be conditioned. Control of the system may further be dependent on a manually assigned occupancy schedule. Accordingly, the existing control strategy does not always control the building indoor air quality (IAQ) at a desired state, and the HVAC energy use might be wasted.

According to an aspect, a heating ventilation and air conditioning (HVAC) system includes an air handling unit having an outlet, at least one zone operably coupled to the outlet of the air handling unit; and at least one indoor air quality sensor operable to monitor a level of one or more contaminants. The at least one indoor air quality sensor is arranged within the at least one zone. A controller operably coupled to the at least one indoor air quality sensor and is configured to determine when an amount of the one or more contaminants within the at least one zone exceeds an allowable threshold and implement a multi-level ventilation strategy to reduce the amount of the one or more contaminants within the at least one zone to below the allowable threshold.

Optionally, the HVAC system comprises a supply duct fluidly connected to the outlet of the air handling unit and the at least one zone, wherein the at least one indoor air quality sensor further comprises a plurality of indoor air quality sensors, one of the plurality of indoor air quality sensors being arranged within the supply duct.

Optionally, the air handling unit further comprises an outside air damper, wherein the at least one indoor air quality sensor further comprises a plurality of indoor air quality sensors, one of the plurality of indoor air quality sensors being arranged at or upstream from the outside air damper relative to a flow of outside air.

Optionally, the multi-level ventilation strategy further comprises: a first, normal mode of operation; a second, indoor air quality mode of operation; a third, enhanced indoor air quality mode of operation; and a fourth, energy conservation mode of operation.

Optionally, the HVAC system comprises a filtration device, the filtration device being selectively operable during the first, normal mode of operation, when the amount of the one or more contaminants within the at least one zone exceeds the allowable threshold.

Optionally, the HVAC system comprises a terminal unit disposed between an outlet of the air handling unit and the at least one zone, the terminal unit including a component for controlling an airflow to the at least one zone, wherein in the second, indoor air quality mode of operation, an airflow set point associated with the terminal unit is maximized.

Optionally, the air delivered from the air handling unit to the at least one zone is a mixture of outside air and return air, wherein in the third, enhanced indoor air quality mode of operation a ratio of outside air to return air within the mixture of outside air and return air is increased.

Optionally, the air handling unit further comprises an outside air damper, and in the third, enhanced indoor air quality mode of operation, the opening of the outside air damper is maximized.

Optionally, in the fourth, energy conservation mode of operation a ratio of outside air to return air within the mixture of outside air and return air is reduced.

Optionally, the at least one zone includes a plurality of zones, and the at least one indoor air quality sensor includes a plurality of indoor air quality sensors, wherein at least one indoor air quality sensor is arranged within each of the plurality of zones.

Optionally, at least one of the second, indoor air quality mode of operation, the third, enhanced indoor air quality mode of operation, and the fourth, energy conservation mode of operation is applied to at least one of the plurality of zones.

Optionally, energy conservation mode of operation is applied to all the plurality of zones when all the plurality of zones when the amount of the one or more contaminants within all the plurality of zones is equal to or less than the allowable threshold.

According to an aspect, a method of operating a heating, ventilation, and air conditioning (HVAC) system includes detecting an amount of at least one contaminant within a zone of the HVAC system, determining that the amount of the at least one contaminant within the zone is above an allowable threshold, increasing an airflow to the zone, and increasing an amount of outside air within the airflow provided to the zone.

Optionally, increasing the airflow to the zone further comprises adjusting an airflow set point of the zone to a maximum airflow set point.

Optionally, the airflow set point of the zone to the maximum airflow set point occurs gradually.

Optionally, increasing the amount of outside air within the airflow provided to the zone further comprises opening an outside air damper.

Optionally, opening the outside air damper further comprises: fully opening the outside air damper; and trimming the outside air damper toward a closed position.

Optionally, increasing the amount of outside air within the airflow provided to the zone occurs in response to determining that the amount of the at least one contaminant within the zone is above the allowable threshold after the airflow to the zone has been maximized for a predetermined period of time.

Optionally, increasing the airflow to the zone occurs in response to determining that the amount of the at least one contaminant within the zone is above the allowable threshold after a filtration device within the zone has been operational for a predetermined period of time.

Optionally, the method comprises decreasing the amount of outside air within the airflow provided to the zone in response to determining that the amount of the at least one contaminant within the zone is below the allowable threshold.

Certain exemplary embodiments will now be described in greater detail by way of example only and with reference to the accompanying drawings in which:
FIG. 1 is a schematic diagram of a portion of a heating, ventilation, and air conditioning system;
FIG. 2 is a flow chart of a method of operating the HVAC system of FIG. 1 based on one or more indoor air quality conditions;
FIG. 3 is a flow chart of a method of evaluating operating of the HVAC system in a second indoor air quality mode of operation; and
FIG. 4 is a flow chart of a method of detecting a failure and diagnosing a cause of the failure within the HVAC system of FIG. 1.

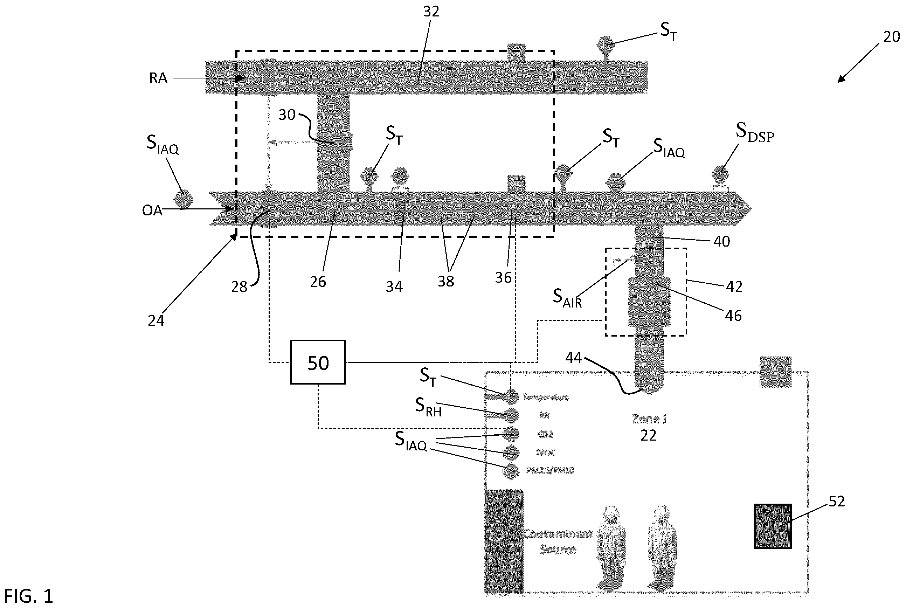

With reference now to FIG. 1, an example of a heating ventilation and air conditioning (HVAC) system 20, such as a variable air volume or dedicated outdoor air multizone system is illustrated. In its simplest form, the HVAC system 20 uses a variable airflow having a constant temperature to heat and cool an area to be conditioned. Although only a single zone 22 or area to be conditioned of the HVAC system 20 is illustrated in the FIGS., it should be understood that an HVAC system 20 may have any number of zones 22, including a single zone, at least two zones, at least three zones, or at least five zones.

The HVAC system 20 is made up of an air handling unit, illustrated schematically at 24, such as roof top unit for example. The air handling unit 24 includes a mixing box 26 configured to receive a supply of outside air OA via operation of an outside air damper 28. In some examples, the mixing box 26 may alternatively or additionally be configured to receive a supply or return air RA from one or more of the zones 22 of the HVAC system 20, such as via return air damper 30 coupled to a return air duct 32 extending between the at least one zone 22 and the air handling unit 24 for example. The outside air OA or mixture of outside air and return air (OA+RA) passes through one or more filters within a filter section 34. A fan 36, such as a variable speed fan for example, is configured to supply air to one or more coil units 38 located downstream from the filter section 34 in amounts determined by the speed of the fan 36. Although the fan 36 is shown as being located downstream from the coil unit 38, and therefore has a draw-through configuration, it should be understood that the fan 36 may be arranged at another located and/or have a blow-through configuration.

One or more supply ducts 40 extend from and couple an outlet of the air handling unit 24 to the plurality of zones 22 of the HVAC system 20. In the illustrated, non-limiting example, each of the mixing box 26, filter section 34, coil unit 38, and fan 36 is illustrated and described herein as being arranged within the air handling unit 24 such that air output therefrom has been conditioned for delivery to one or more zones 22. However, in other examples, one or more of the mixing box 26, filter section 34, coil unit 38, and fan 36 may be located remotely from the air handling unit 24, such as within a portion of the supply duct 40 located downstream from the air handling unit 24 for example.

A separate terminal unit 42 is operably coupled to each of the plurality of supply ducts 40 at or upstream from an outlet 44 associated with a respective zone 22. Accordingly, the terminal unit 42 is a flow control device provided at the individual zone level, and therefore is configured to control the flow rate of the airflow provided from the mixing box 26 to a respective zone 22. In an example, such as when the HVAC system is a VAV system, the terminal unit 42 includes a terminal box having an air damper and an actuator, represented in combination at 46, the actuator being operable to adjust a position of the air damper 46 to control the air flow through the air damper 46 into the zone 22. In other examples, the terminal unit 42 includes a fan coil unit having a fan located therein to drive a flow of air to an adjacent zone 22. A terminal unit 42 having any suitable construction for controlling a flow into a zone 22 is contemplated herein.

One or more sensors are arranged throughout the HVAC system 20 including within each respective zone 22 of the HVAC system 20. In the illustrated, non-limiting example, the one or more sensors may include one or more temperature sensors S_{T} configured to measure a temperature of at least one of the environment within the zone 22, the supply air within the supply duct 40, and the mixture of air within the mixing box 26. Alternatively, or in addition, the one or more sensors may include a humidity sensor S_{RH} operably to monitor a relative humidity of the environment within the zone 22. The HVAC system 20 may further include other types of sensors including, but not limited to pressure sensors, such as a static pressure sensor S_{DSP} for example, or an airflow sensor, shown at S_{AIR}.

The one or more sensors of the HVAC system 20 alternatively or additionally include at least one sensor S_{IAQ} operable to monitor a parameter associated with the indoor air quality (IAQ). In an example, the at least one sensor S_{IAQ}, also referred to herein as an indoor air quality sensor (IAQ sensor), is operable to detect the level or amount of one or more contaminants, including, but not limited to carbon dioxide, volatile organic compounds, and particulate matter for example. The HVAC system 20 may include a plurality of IAQ sensors arranged at different locations within the system 20, such as within each zone 22, within the supply duct 40, and/or upstream from or at the outside air damper. As shown, a separate sensor S_{IAQ} is provided for each separate contaminant being monitored. However, in other examples, a single sensor S_{IAQ} may be operable to measure a plurality of contaminants, or alternatively, a contaminant and another operating parameter. Each of the sensors described herein may be operable to continuously monitor the environment, or may measure the environment at intervals, such as less than or equal to every minute for example.

Operation of the HVAC system 20 is controlled by a controller 50 operably coupled to each of the plurality of sensors, outside air damper 28, fan 36, and the actuator of each respective terminal unit 42. The controller 50 may include one or more or a microprocessor, microcontroller, application specific integrated circuit (ASIC), or any other form of electronic controller known in the art. The controller 50 may be part of the HVAC system 20, or alternatively, may be part of a building control system for a building having at least one area to be conditioned by the HVAC system 20. In examples where the controller 50 is an integral part of the HVAC system 20, the controller 50 may be configured to communicate directly with a controller of a building control system, or alternatively, may be configured to deposit and access data, such as one or more algorithms or programs for example, stored on the cloud.

Existing HVAC systems typically adjust one or more operating parameters, such as the position of the air damper 46 within a respective terminal unit 42, based on the desired temperature associated with the zone 22, for example the setting of a thermostat associated with the zone 22, and the actual temperature of the environment within the zone 22. However, in an example, the controller 50 of the HVAC system 20 illustrated and described herein is configured to adjust one or more operating parameters to control the ventilation of the zone 22 in response to the indoor air quality within the zone 22 as measured by the one or more IAQ sensors S_{IAQ}.

The HVAC system 20 may be configured to apply a multi-level ventilation strategy, each level being associated with a ventilation mode, based on the measured level of a contaminant. For example, in a first, normal mode of operation, the measured level of each of the contaminants is less than or equal to a respective allowable threshold associated with an acceptable level of each of the contaminants. In the first, normal mode of operation, the air flow provided to each of the zones 22 is selected to meet or maintain the temperature demand of the zone 22.

In a second mode of operation, also referred to herein as an IAQ ventilation mode, one or more parameters of the airflow provided to an individual zone 22 is adjusted when the environment within the zone 22 has an elevated level of one or more contaminants. Specifically, the ventilation provided to such a zone 22 is increased as a means to dilute the one or more contaminants present therein. In an example, this dilution is performed via the controller 50 by increasing the airflow set point from a current set point to the maximum set point. This increase may be gradual, occurring over a fixed period of time, such as five minutes for example. However, in other examples, the set point may automatically increase to the maximum set point. The airflow set point may be adjusted by changing the position of the air damper 46 or by changing the fan speed within the terminal unit 42 operably coupled to the zone 22. In an example, the air damper 46 will modulate to maintain the airflow at the greatest airflow set point that can be maintained. It should be understood that since the second mode of operation is implemented at a zone 22, in examples where the HVAC system 20 has a plurality of zones, one of the zones 22 may be operating in the second, IAQ ventilation mode while another of the zones 22 may be operating in a first, normal mode.

The HVAC system 20 may additionally be operable in a third mode, also referred to herein as the enhanced IAQ ventilation mode. In the enhanced IAQ mode, the airflow provided to each of the zones 22 generally remains the same as prior to initiation of the third mode. Accordingly, a zone 22 that was previously operating in the second, IAQ ventilation mode remains at the maximum airflow set point and a zone 22 that was previously operating in a first, normal mode remains at the standard or current airflow set point. In response to operation in the third mode, the controller 50 is configured to open the outside air damper 28 to increase the flow of outside air OA into the HVAC system 20, such as into the air handling unit 24 for example. As a result, the amount of outside air OA within the mixture of return air and outside air OA+RA, or alternatively, the ratio of outside air OA to return air RA within the mixture of return air and outside air OA+RA provided to each of the zones 22 of the HVAC system 20 will change.

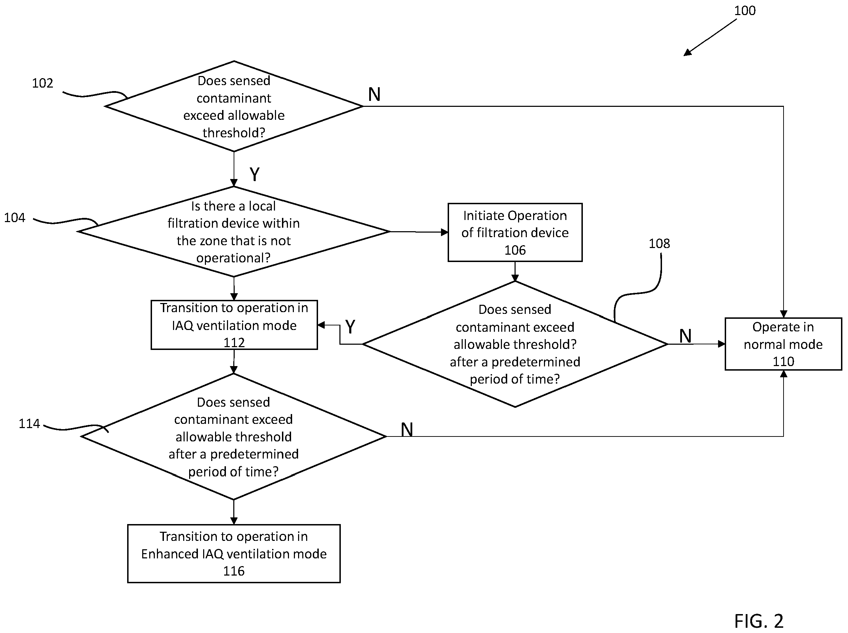

With reference now to FIG. 2, a method 100 of operating the HVAC system based on one or more IAQ conditions is described. As shown in block 102, during normal operation, the level of one or more contaminants within a zone 22 is sensed by the one or more IAQ sensors S_{IAQ}. During operation in the normal mode, if the sensed level of one or more of the contaminants exceeds a respective threshold associated therewith, the HVAC system 20 may be configured to implement one or more mitigative actions. For example, in examples where the level of a contaminant, such as the particulate matter for example, exceeds the allowable threshold for a predetermined period of time, a filtration device 52, such as air purifier, may be operated to try to remove contaminants to achieve an acceptable level. Accordingly, as shown in block 104, the controller 50 may be configured to determine whether a filtration device 52 is present within the zone 22 and is non-operation, and if, so initiate operation of the filtration device 52, in block 106. As shown in block 108, the level of contaminants will continue to be sampled by the IAQ sensors S_{IAQ} during operation of the filtration device 52. If during operation of the filtration device 52, the level of contaminants falls below the allowable threshold, the HVAC system 20 will cease operation of the filtration device 52 and continue operation in the first, normal mode (see block 110). However, in the event that the level of the one or more contaminants remains above the allowable threshold after a predetermined period of time of operation of the filtration device 52, such as after the filtration device 52 has been operational for two hours for example, the controller 50 will transition the zone 22 to operation in a second, IAQ ventilation mode, as shown in block 112.

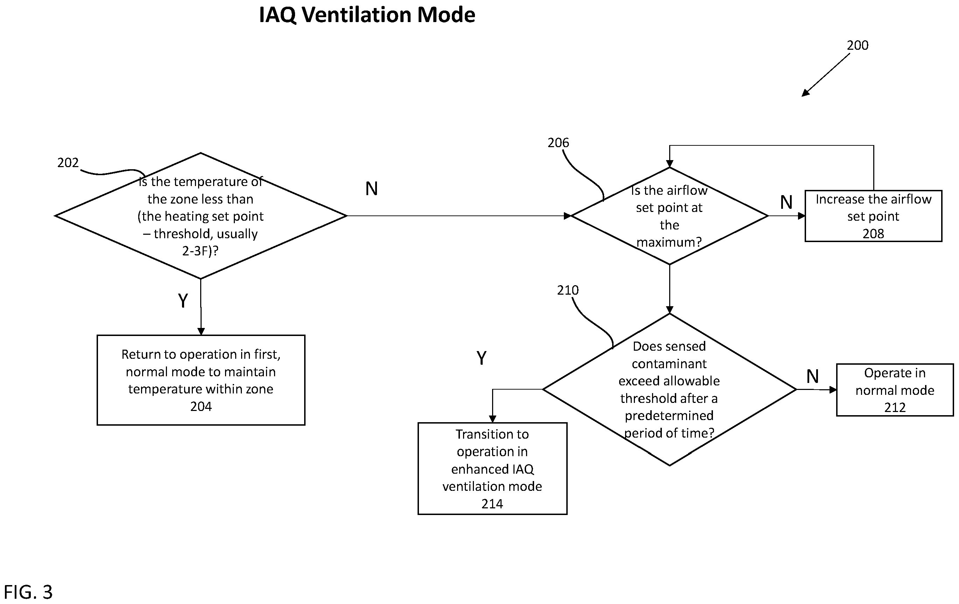

With continued reference to FIG. 2 and further reference now to FIG. 3, upon entering the second, IAQ ventilation mode, the controller 50 will evaluate an operating condition of the zone 22, as shown in block 202. Specifically, the controller 50 will determine whether the zone 22 is operating in a cooling condition, a heating condition, or a non-heating, non-cooling condition based on the temperature within the zone 22 and the respective cooling and heating temperature set points. When the zone 22 is in a cooling condition and the temperature of the zone 22 is greater than the cooling set point, when the zone 22 is in a heating condition and the zone temperature is less than the heating set point, and when the zone temperature is between the heating set point and the cooling set point, controller 50 will proceed with operation of the zone 22 in the second, IAQ ventilation mode. Because additional cold air is typically sent to the zone 22 during operation in the second, IAQ ventilation mode, if any of these temperature conditions is not satisfied, the controller will continue operation in the first, normal mode of operation, as shown in block 204.

As previously noted, during operation in the second, IAQ ventilation mode, the airflow set point of the zone 22 will be maximized to try to dilute the contaminants within the zone 22. Accordingly, in block 206, the controller 50 will determine whether the current airflow set point is equal to the maximum set point. If not, the controller 50 will continue to gradually increase the airflow set point, as shown in block 208, until the maximum airflow set point is achieved. The zone 22 will continue to operate with this maximum airflow set point for a predetermined period of time, such as two hours for example. If during operation in this condition, best shown in blocks 114 and 210, the level of each of the contaminants falls below a respective allowable threshold, the controller 50 will transition to operation in the first, normal mode (see blocks 116 and 212). However, in the event that the levels of one or more contaminants remains above the allowable threshold after the predetermined period of time of operation, the controller 50 will transition the operation in the third, enhanced IAQ ventilation mode, as shown in block 216.

In an example, the controller 50 may determine whether to transition to operation of the HVAC system 20 in the third, enhanced IAQ ventilation mode based on the total number of zones 22 of the HVAC system 20 that are currently operating in the second, IAQ ventilation mode. For example, if the total number of zones 22 in the second, IAQ ventilation mode or if a percentage of the total number of zones 22 of the HVAC system 20 that are operating in the second, IAQ ventilation mode is equal to or greater than a predetermined threshold, the controller 50 may imitate operation in the third, enhanced IAQ ventilation mode. However, in examples where the total number or percentage is less than the threshold, the individual zones may continue to operate in the second, IAQ ventilation mode until the threshold is reached or exceeded.

As previously noted, in the third, enhanced IAQ ventilation mode, the outdoor airflow in take is increased. Accordingly, in an example, the controller 50 is configured to measure the level of contaminants within the outside air OA and determine whether to transition to operation of the HVAC system 20 in the third, enhanced IAQ ventilation mode accordingly. For example, if the level of contaminants within the outside air OA is at or below the allowable threshold, the system 20 will proceed to the third, enhanced IAQ ventilation mode.

In an example, this increase in outside air OA occurs by opening the outside air damper 28 based on an optimization algorithm stored within or accessible by the controller 50. The optimization algorithm may be configured to balance maintaining the outside air damper 28 in an open position with maintaining the temperature of the supply air, as measured by S_{T}. For example, when the HVAC system 20 is initially transitioned to the third, enhanced IAQ ventilation mode, the outdoor air damper 28 may be moved to a fully or 100% open position. The position of the outdoor air damper 28 may be then adjusted towards the closed position as needed, such as to meet the temperature demands of the zones 22 for example. This adjustment may be performed via a trim and respond method.

It should be understood that one or more parameters of the multi-level ventilation control strategy may vary based on the occupancy of a zone within the building, or the building in its entirety. For example, the allowable threshold of the contaminants within a zone when the zone is unoccupied may be greater than the allowable threshold when of the contaminants within the zone when the zone is occupied. Alternatively, or in addition, the controller 50 may be configured to selectively implement the multi-level ventilation control strategy based on the detected occupancy of the building, a zone within the building, or a predetermined occupancy schedule.

When a zone 22 is operating in the first, normal mode of operation, and the level of each contaminant, as measured by the IAQ sensors S_{IAQ}, is within an acceptable threshold, the controller 50 may be configured to transition to a fourth, energy conservation mode of operation in which one or more operating parameters of the HVAC system 20 are adjusted to minimize the operational energy required by the system 20. For example, in the fourth, energy conservation mode, the controller 50 may be configured to reduce the minimum airflow set point and adjust the corresponding fan energy. Alternatively, or in addition, the controller 50 may be configured to reduce the amount of outside air provided to the system 20 via the outside air damper 28. Accordingly, in the fourth, energy conservation mode, a ratio of outside air OA to return air RA within the mixture of outside air and return air is reduced. In an example, the minimum set point position of the outside air damper 28 may be reset linearly from the current minimum set point towards zero, if all of the contaminants within the zone are below the allowable threshold. This reset may be performed by a linear reset, or by a trim and response method.

By implementing this sequential, multi-level contaminant mitigation strategy, the critical air contaminants present within the HVAC system 20 will directly controlled, thereby reducing the indoor air pollution and improving indoor air quality. Further, this sequence of increased ventilation provides dynamic control while also minimize the energy and comfort impact on the HVAC system 20.

Alternatively, or in addition to the plurality of ventilation modes discussed above, the controller 50 of the HVAC system 20 is configured to use the data collected from the one or more IAQ sensors S_{IAQ} to not only detect the occurrence of a fault or an unsatisfied IAQ condition, but also to perform diagnostics to determine the cause of the fault. The controller 50 may be configured to run a fault detection and diagnostic (FDD) program stored within or accessible by the controller 50 to determine a root cause for these unsatisfied IAQ conditions in real time. Examples of the indoor air quality conditions that are unsatisfied include when a level of one or more of the contaminants exceeds an allowable threshold within a zone 22, or when one or more components of the HVAC system 20 have failed to move to a commanded position. In addition to the information gathered by the IAQ sensors, other inputs to the FDD program are real-time operational data, including but are not limited to terminal unit airflow, set point, designed airflow, damper position, and static pressure.

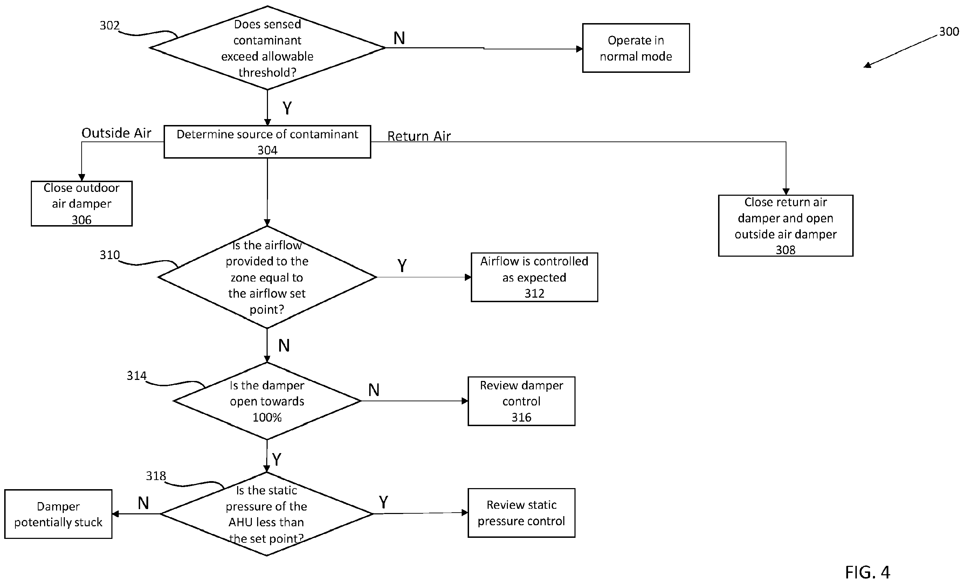

With reference now to FIG. 4, an example of an evaluation method 300 performed by the FDD program is illustrated. As shown, the method includes sensing the level of one or more contaminants within a zone 22 via the one or more IAQ sensors, as shown in block 302. If the sensed level of one or more of the contaminants exceeds a respective threshold associated therewith, the FDD program is configured to identify a source of the contaminants, as shown in block 304. In an example, one or more IAQ sensors S_{IAQ} may be arranged within the supply duct 40 associated with a zone 22. By comparing the sensed level of contaminants within the supply duct 40 with sensed the level of contaminants within the zone 22, the FDD program can be used to determine if the source of the contaminants is the supply air, or if the source is arranged within environment of the zone 22.

In the event that the source of the contaminant is the supply air, the controller 50 may be able to further determine if the outdoor air OA being provided to the HVAC system 20 and/or the return air RA being mixed with the outdoor air OA to form the supply air has a high level of contaminants. Corrective actions to reduce the level of contaminants within the supply air may be taken based on the respective source of the contaminants. For example, as shown in block 306, in the event that the outside air OA is contaminated, the outdoor air damper 28 may be closed. Alternatively, if the return air RA includes contaminants, as shown in block 308, the return air damper 30 may be closed and the outdoor air damper 28 may be opened.

If the FDD program determines that the contaminants are localized to the environment within the zone 22, the FDD program may further evaluate the conditions associated with a flow of air provided to the zone 22. In an example, as shown in block 310, the FDD program is configured to evaluate whether the airflow that is actually being provided to the zone is equal to or matches the airflow set point. If the airflow being delivered matches the airflow set point, the FDD program can determine that the airflow is being controlled as expected (see block 312). In an example, the FDD program may be configured to further evaluate the airflow to determine whether the maximum airflow is insufficient to dilute the contaminants to an acceptable level, or whether the maximum air flow has not been continuously delivered to the zone 22 due to the need to meet the thermal demands of the zone 22.

Further, in block 314, the FDD program may evaluate whether the air damper 46 of a terminal unit 42 associated with a zone moves towards a fully open position when commanded to do so. Determining that the air damper 46 is not moving, even when the airflow is lower than the set point indicates that the damper control needs to be reviewed, as shown in block 316. This review of the damper control may include reviewing and correcting the control sequence and/or tuning the damper control loop. If the air damper 46 does move as commanded, the FDD program may be configured to further evaluate, as in block 318, whether the static pressure of the air handling unit 24 is less than the static pressure set point. A static pressure of the air handling unit 24 that is less than the set point may indicate that the static pressure within the supply duct 40 connecting the air handling unit 24 to the zone 22 may be impeding the airflow to the zone 22 at the airflow set point. Accordingly, as shown in block 320, the FDD program may review and correct the static pressure control sequence and/or tune the static pressure control loop. If the static pressure of the air handling unit 24 is greater than the set point, the airflow may not be able to reach the airflow set point. Accordingly, in block 322, the FDD program may evaluate whether the air damper 46 is stuck and/or may increase the set point of the static pressure of the air handling unit 24.

As described herein, the controller 50, via the FDD program, may be configured to inform communicate with a building management system, or alert a manager associated with the area being conditioned by the HVAC system 20 that an unsatisfactory IAQ condition is present. Further, the controller 50 may identifies the possible root causes including the contaminant source locations and provides operational suggestions, which can help address the unsatisfactory IAQ condition quickly and effectively. Accordingly, incorporation of such a program into operation of the HVAC system 20 will save time and labor while improving the air quality of the arears to be conditioned.

The term "about" is intended to include the degree of error associated with measurement of the particular quantity based upon the equipment available at the time of filing the application.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims. In addition, many modifications may be made to adapt a particular situation or material to the teachings of the present disclosure without departing from the scope of the claims. Therefore, it is intended that the present invention not be limited to the particular embodiment disclosed, but that the present invention will include all embodiments falling within the scope of the claims.

## Claims

1. A heating ventilation and air conditioning (HVAC) system (20) comprising:
an air handling unit (24) having an outlet (44);
at least one zone (22) operably coupled to the outlet of the air handling unit;
at least one indoor air quality sensor (S_{IAQ}) operable to monitor a level of one or more contaminants, wherein the at least one indoor air quality sensor is arranged within the at least one zone; and
a controller (50) operably coupled to the at least one indoor air quality sensor, wherein the controller is configured to:
determine (102) when an amount of the one or more contaminants within the at least one zone exceeds an allowable threshold; and
implement a multi-level ventilation strategy to reduce the amount of the one or more contaminants within the at least one zone to below the allowable threshold.

2. The HVAC system (20) of claim 1, further comprising a supply duct (40) fluidly connected to the outlet (44) of the air handling unit (24) and the at least one zone (22), wherein the at least one indoor air quality sensor (S_{IAQ}) further comprises a plurality of indoor air quality sensors, one of the plurality of indoor air quality sensors being arranged within the supply duct.

3. The HVAC system (20) of claim 1 or 2, wherein the air handling unit (24) further comprises an outside air damper (28), wherein the at least one indoor air quality sensor (S_{IAQ}) further comprises a plurality of indoor air quality sensors, one of the plurality of indoor air quality sensors being arranged at or upstream from the outside air damper relative to a flow of outside air.

4. The HVAC system (20) of any of claims 1 to 3, wherein the multi-level ventilation strategy further comprises:
a first, normal mode of operation (110);
a second, indoor air quality mode of operation (112);
a third, enhanced indoor air quality mode of operation (116); and
a fourth, energy conservation mode of operation.

5. The HVAC system (20) of claim 4, further comprising a filtration device (52), the filtration device is selectively operable during the first, normal mode of operation (110), when the amount of the one or more contaminants within the at least one zone (22) exceeds the allowable threshold.

6. The HVAC system (20) of claim 4 or 5, further comprising a terminal unit (42) disposed between an outlet (44) of the air handling unit (24) and the at least one zone (22), the terminal unit including a component (46) for controlling an airflow to the at least one zone, wherein in the second, indoor air quality mode of operation (112), an airflow set point associated with the terminal unit is maximized.

7. The HVAC (20) system of any of claims 4 to 6, wherein the air delivered from the air handling unit (24) to the at least one zone (22) is a mixture of outside air and return air, wherein in the third, enhanced indoor air quality mode of operation (116) a ratio of outside air to return air within the mixture of outside air and return air is increased.

8. The HVAC (20) system of any of claims 4 to 7, wherein the air handling unit (24) further comprises an outside air damper (28), and in the third, enhanced indoor air quality mode of operation (116), the opening of the outside air damper is maximized and/or, wherein in the fourth, energy conservation mode of operation a ratio of outside air to return air within the mixture of outside air and return air is reduced.

9. The HVAC system (20) of any of claims 4 to 8, wherein the at least one zone (22) includes a plurality of zones, and the at least one indoor air quality sensor (S_{IAQ}) includes a plurality of indoor air quality sensors, wherein at least one indoor air quality sensor is arranged within each of the plurality of zones.

10. The HVAC system (20) of claim 9, wherein at least one of the second, indoor air quality mode of operation (112), the third, enhanced indoor air quality mode of operation (116), and the fourth, energy conservation mode of operation is applied to at least one of the plurality of zones (22) and optionally, wherein the fourth, energy conservation mode of operation is applied to all the plurality of zones (22) when the amount of the one or more contaminants within all the plurality of zones is equal to or less than the allowable threshold.

11. A method (102) of operating a heating, ventilation, and air conditioning (HVAC) system (20) comprising:
detecting an amount of at least one contaminant within a zone (22) of the HVAC system;
determining (102) that the amount of the at least one contaminant within the zone is above an allowable threshold;
increasing an airflow to the zone; and
increasing an amount of outside air within the airflow provided to the zone.

12. The method (102) of claim 11, wherein increasing the airflow to the zone (22) further comprises adjusting an airflow set point of the zone to a maximum airflow set point and optionally, wherein adjusting the airflow set point of the zone (22) to the maximum airflow set point occurs gradually.

13. The method (102) of claim 11 or 12, wherein increasing the amount of outside air within the airflow provided to the zone (22) further comprises opening an outside air damper (28) and optionally, wherein opening the outside air damper (28) further comprises:
fully opening the outside air damper; and
trimming the outside air damper toward a closed position.

14. The method (102) of any of claims 11 to 13, wherein increasing the amount of outside air within the airflow provided to the zone (22) occurs in response to determining that the amount of the at least one contaminant within the zone is above the allowable threshold after the airflow to the zone has been maximized for a predetermined period of time or in response to determining that the amount of the at least one contaminant within the zone is above the allowable threshold after a filtration device (52) within the zone has been operational for a predetermined period of time.

15. The method (102) of any of claims 11 to 14, further comprising decreasing the amount of outside air within the airflow provided to the zone (22) in response to determining that the amount of the at least one contaminant within the zone is below the allowable threshold.
